# EUROPÄISCHE PATENTSCHRIFT

(11) **EP 4 257 863 B1**
(45) Veröffentlichungstag und Bekanntmachung des Hinweises auf die Patenterteilung: **17.09.2025**
(21) Anmeldenummer: 23166473.1
(22) Anmeldetag: 04.04.2023
(51) Int. Cl.: F16M 11/04, A61M 16/00, F16M 11/22, A47F 5/08, H04M 1/02, F16M 13/02, A61G 3/00

(54) **GERÄTEHALTER ZUR AUFNAHME EINES MEDIZINISCHEN GERÄTS**
DEVICE HOLDER FOR RECEIVING A MEDICAL DEVICE
SUPPORT D'APPAREIL DESTINÉ À RECEVOIR UN APPAREIL MÉDICAL

(30) Priorität: 07.04.2022 DE 102022108457
(43) Veröffentlichungstag der Anmeldung: 11.10.2023
(73) Patentinhaber: StarMed GmbH, 88719 Stetten (DE)
(72) Erfinder: Stern, René, 88719 Stetten am Bodensee (DE)
(74) Vertreter: DREISS Patentanwälte PartG mbB

(56) Entgegenhaltungen:
- WO-A1-2021/062558
- US-A1- 2007 018 061

## Beschreibung

Die Erfindung betrifft einen Gerätehalter, der beispielsweise im Rettungswesen, bei der medizinischen Versorgung von Soldatinnen und Soldaten oder im Katastrophenschutz, eingesetzt wird. Diesen Einsatzgebieten ist gemeinsam, dass unter hohem Zeitdruck und in einer unübersichtlichen und zumeist unbekannten Umgebung eine rasche und hochwertige Hilfe für Patienten oder Verwundete geleistet werden muss. Dazu wird eine Vielzahl medizinischer Geräte eingesetzt. Diese Geräte sind empfindlich und dürfen während des Einsatzes nicht durch Erschütterungen, Stöße oder andere Gegenstände beschädigt werden. Außerdem ist es wichtig, dass diese Geräte bei Bedarf fest an einer übergeordneten Struktur, wie beispielsweise einer Patientenliege, einer Tragbahre, befestigt werden können.

WO 2021 / 062 558 A1 offenbart einen Gerätehalter mit einigen Merkmalen des Anspruchs 1. US 2007 / 018 061 A1 offenbart eine Anzeigevorrichtung.

Der Erfindung liegt die Aufgabe zugrunde, einen solchen Gerätehalter bereitzustellen, der erstens den erforderlichen Schutz eines in ihm aufgenommenen medizinischen Geräts vor Beschädigungen gewährleistet. Andererseits soll der Gerätehalter flexibel an die Aufnahme verschiedenster medizinischer Geräte adaptierbar sein. Diese Aufgabe wird erfindungsgemäß gelöst durch einen Gerätehalter nach Anspruch 1.

Wenn der Schwenkbügel in seiner Schließstellung arretiert ist, dann grenzen die Rückwand, die Schenkel der Streben und der Schwenkbügel einen geschützten Aufnahmeraum von der Umgebung ab. In diesem Aufnahmeraum wird das medizinische Gerät angeordnet und gehalten und auf diese Weise vor mechanischen Beschädigungen geschützt. Die Rückwand, die Schenkel der Streben und der Schwenkbügel ragen mindestens punktuell über die Vorderseite, die Rückseite, die Oberseite und die Unterseite des aufgenommenen medizinischen Geräts hinaus und bilden somit eine schützende Struktur um das medizinische Gerät herum.

Um die Aufnahme verschiedenster medizinischer Geräte zu ermöglichen, ist in weiterer erfindungsgemäßer Ausgestaltung an der Rückwand eine gerätespezifische Aufnahme für ein medizinisches Gerät lösbar befestigt. Diese gerätespezifische Aufnahme ist so ausgestaltet, dass sie mit einer eventuell an dem medizinischen Gerät vorhandenen mechanischen Schnittstelle kompatibel ist, bzw. mit dieser zusammenwirkt, so dass das Gerät sicher in dem Aufnahmeraum gehalten wird.

Beispielsweise kann eine erste Aufnahme für ein medizinisches Gerät eine Basisfläche und mindestens ein Formschlusselement umfassen. Die Basisfläche ist gewissermaßen die Auflagefläche, auf der das medizinische Gerät mit seiner Unterseite aufliegt. Über das mindestens eine Formschlusselement, das mit einem komplementär geformten Gegenstück des medizinischen Geräts zusammenwirkt, wird die Positionierung des medizinischen Geräts relativ zu der Rückwand bzw. zu der Aufnahme sichergestellt. Dadurch kann das Gerät sich nicht aus dem Aufnahmeraum, der von dem erfindungsgemäßen Gerätehalter gebildet wird, herausbewegen.

Die Basisfläche der gerätespezifischen Aufnahme ist bevorzugt orthogonal zu der Rückwand angeordnet. Das mindestens eine Formschlusselement kann nach oben über die Basisfläche hinausragen. Es kann beispielsweise als Feder, als Stift oder als Zapfen ausgebildet sein. Selbstverständlich ist es auch möglich, dass zwei oder mehr Formschlusselemente an der gerätespezifischen Aufnahme angeordnet sind.

Es ist aber auch möglich, das mindestens eine Formschlusselement als Vertiefung in der Basisfläche auszubilden. Es kann dann als Nut bzw. als prismatische oder kegelstumpfförmige Vertiefung ausgebildet sein. Die Gestalt der Formschlusselemente wird maßgeblich von der mechanischen Schnittstelle des medizinischen Geräts bestimmt.

In weiterer vorteilhafter Ausgestaltung der Erfindung umfasst der Schwenkbügel ein Griffelement. Dieses Griffelement erleichtert die Bedienung des Schwenkbügels und dient gleichzeitig als Schutz des in dem Aufnahmeraum befindlichen medizinischen Geräts. Das Griffelement ist bevorzugt gebogen/gekrümmt, so dass es mindestens an seinem höchsten Punkt über die Oberseite des aufgenommenen medizinischen Geräts hinausragt.

In weiterer vorteilhafter Ausgestaltung der Erfindung ist an dem Schwenkbügel mindestens ein gerätespezifischer Niederhalter für das in dem Aufnahmeraum befindlichen medizinischen Gerät anordenbar. Dieser Niederhalter hält, wie der Name schon sagt, das medizinische Gerät in einer Position, in der es auf der Basisfläche der Aufnahme aufliegt und der Formschluss zwischen dem oder den Formschlusselementen der Aufnahme und dem medizinischen Gerät vorhanden ist.

Der oder die Niederhalter sind ebenfalls gerätespezifisch geformt, um das medizinische Gerät sicher in de, Aufnahmeraum zu fixieren. Bevorzugt sind die Niederhalter im Bereich der Kontaktfläche mit dem medizinischen Gerät gepolstert oder gummiert. Dadurch wird die Flächenpressung zwischen den Niederhaltern und dem Gehäuse des medizinischen Geräts verringert und Beschädigungen des Geräts vermieden.

In einer weiteren vorteilhaften Ausgestaltung der Erfindung weist die Rückwand Durchbrüche und/oder Gewindebohrungen auf. Mit deren Hilfe kann beispielsweise eine gerätespezifische Aufnahme an der Rückwand befestigt werden. Darüber hinaus kann mit Hilfe dieser Gewindebohrungen bzw. Durchbrüche der Gerätehalter selbst an einer anderen Struktur, wie z.B. an einem Rettungsfahrzeug oder einer Patientenliege angeordnet werden.

Der Schwenkbügel selbst kann auch in weiterer vorteilhafter Ausgestaltung der Erfindung Formschlusselemente aufweisen, die beispielsweise ein medizinisches Gerät niederhalten und/oder gegen Kippen sichern.

Zusätzlich dazu können aber an dem Schwenkbügel auch noch die bereits erläuterten gerätespezifischen Niederhalter lösbar befestigt werden, um eine noch bessere Sicherung des medizinischen Geräts in dem Aufnahmeraum zu gewährleisten.

Der Schwenkbügel wird bevorzugt mit Hilfe von zwei arretierbaren (Dreh-)Gelenken an den Streben oder an der Rückwand gelagert. Jedes Gelenk umfasst einen Mittelteil und ein Gehäuse, wobei in dem Gehäuse ein federbelasteter Sperrbolzen angeordnet ist, der in der Schließstellung in einen Durchbruch des Mittelteils einfährt und dadurch das Gelenk und mit ihm den Schwenkbügel formschlüssig arretiert.

Die Bauteile des Gerätehalters können aus thermoplastischem Kunststoff, bevorzugt einem faserverstärkten thermoplastischen Kunststoff, aber auch aus Leichtmetall oder Verbundfaserwerkstoffen hergestellt werden. Durch den modularen Aufbau können die Einzelteile auch aus verschiedenen Werkstoffen hergestellt werden und bei Bedarf, z.B. im Falle einer mechanischen Beschädigung, leicht ausgetauscht werden.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: eine Isometrie eines ersten Ausführungsbeispiels eines erfindungsgemäßen Gerätehalters (Schließstellung);
- Figur 2: eine Seitenansicht des Gerätehalters gemäß Figur 1 mit einem eingesetzten medizinischen Gerät;
- Figur 3: eine Seitenansicht mit einem eingesetzten medizinischen Gerät mit einem Zusatzbauteil;
- Figur 4: das erste Ausführungsbeispiel von oben mit geöffnetem Schwenkbügel;
- Figur 5: eine Isometrie eines zweiten Ausführungsbeispiels;
- Figur 6: eine Seitenansicht des zweiten Ausführungsbeispiels (Schließstellung);
- Figur 7: eine Seitenansicht des zweiten Ausführungsbeispiels mit geöffnetem Schwenkbügel;
- Figur 8: eine Ansicht von hinten des zweiten Ausführungsbeispiels;
- Figur 9: ein Ausführungsbeispiel eines erfindungsgemäßen Dreh-Gelenks in eingebautem Zustand;
- Figur 10: eine Seitenansicht des Drehgelenks (Offenstellung);
- Figur 11: eine Seitenansicht des Drehgelenks (Schließstellung) und
- Figur 12: eine halb-transparente Isometrie des Drehgelenks.

### Beschreibung der Ausführungsbeispiele

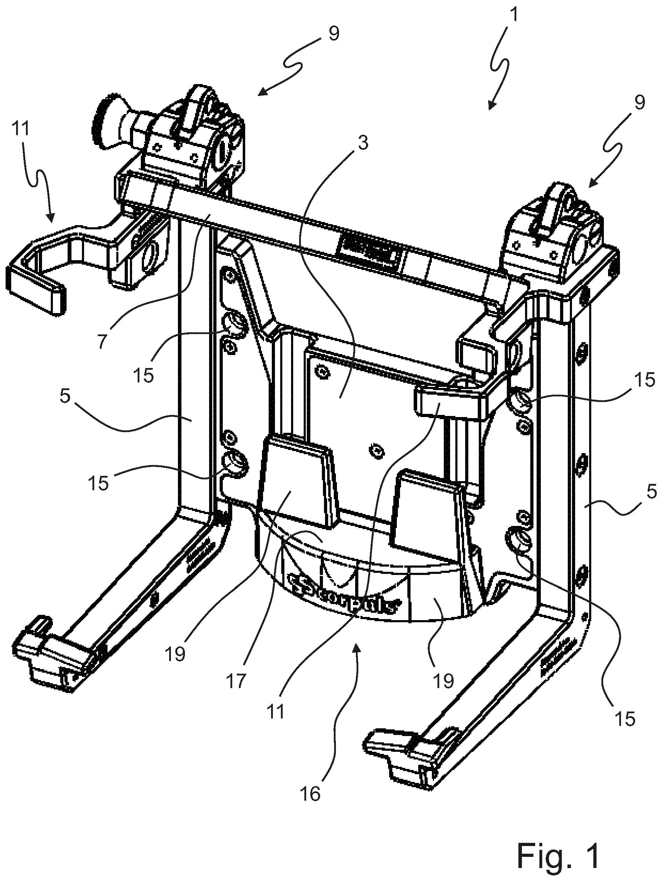

In der Figur 1 ist ein erstes Ausführungsbeispiel eines erfindungsgemäßen Gerätehalters 1 in einer Isometrie dargestellt. Wesentliche Bauteile des Gerätehalters 1 sind: Eine Rückwand 3, zwei L-förmige Streben 5, ein Schwenkbügel 7 sowie zwei Dreh-Gelenke 9, mit deren Hilfe der Schwenkbügel 7 an den Streben 5 oder der Rückwand 3 schwenkbar gelagert ist.

Die Gelenke 9 sind bevorzugt so ausgeführt, dass sie den Schwenkbügel 7 in einer Schließstellung arretieren. In der Figur ist die Schließstellung dargestellt.

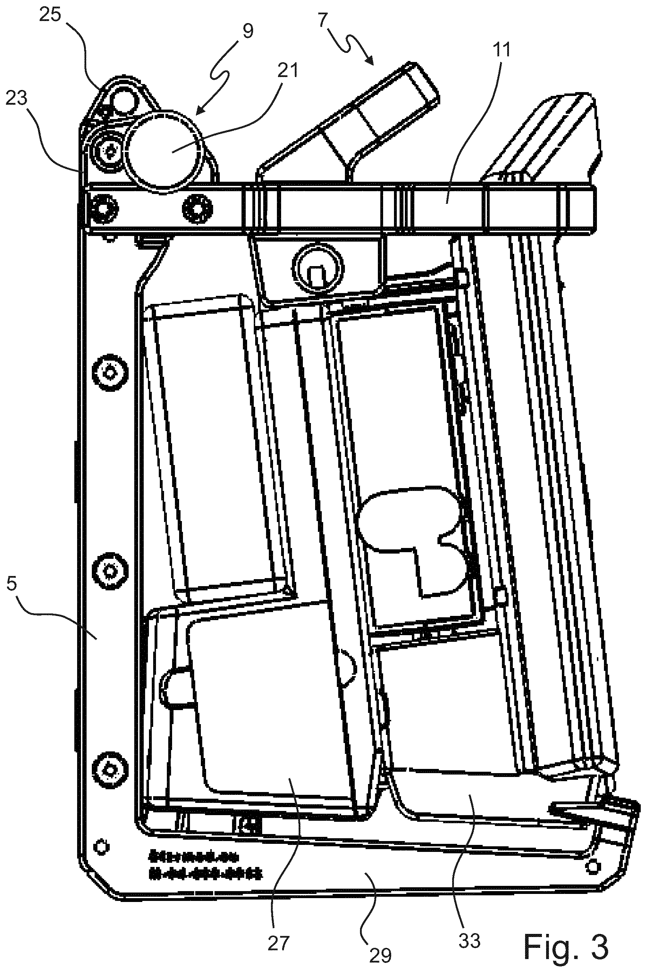

In dem ersten Ausführungsbeispiel weist der Schwenkbügel 7 die Besonderheit auf, dass er an dem der Rückwand 3 gegenüberliegenden Ende, Formschlusselemente 11 aufweist. Diese optionalen Formschlusselemente 11 können zur eines medizinischen Geräts dienen (siehe zum Bespiel die Figur 3).

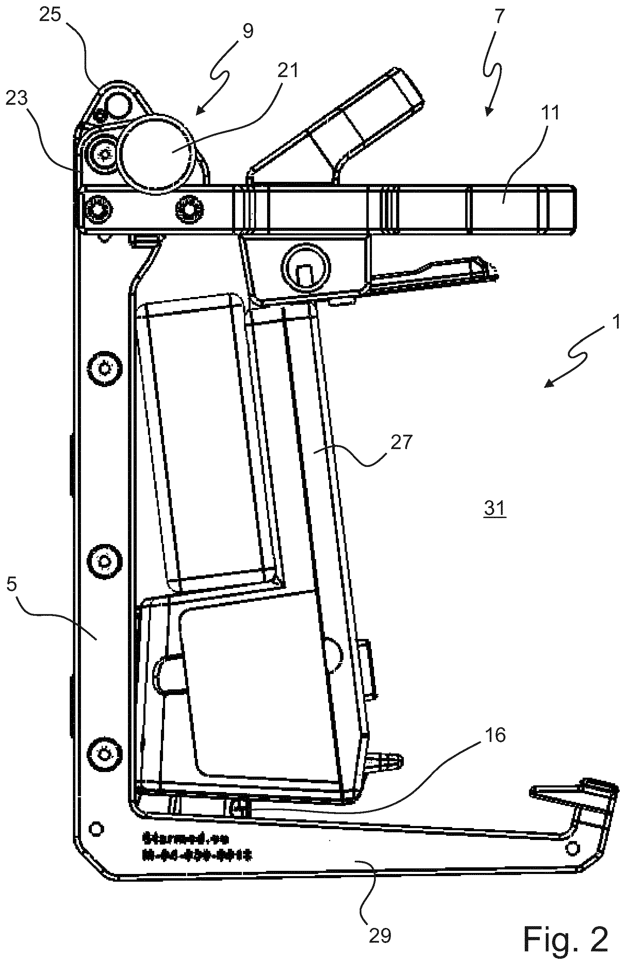

An dem Schwenkbügel 7 sind darüber hinaus gerätespezifische Niederhalter 13 angeordnet. Die Funktion dieser Niederhalter 13 wird im Zusammenhang mit der Figur 2 näher erläutert.

In der Rückwand 3 sind mehrere (Gewinde-)Bohrungen und Durchbrüche 15 ausgebildet. Mit Hilfe dieser Gewindebohrungen und Durchbrüche 15 ist es möglich, den Gerätehalter 1 an einer übergeordneten Struktur (nicht dargestellt) zu befestigen.

Darüber hinaus dienen die Gewindebohrungen und Durchbrüche 15 auch dazu, eine gerätespezifische Aufnahme 16 für ein medizinisches Gerät lösbar an der Rückwand 3 zu befestigen. Die in der Figur 1 dargestellte Aufnahme 16 ist mit Hilfe von nicht sichtbaren Befestigungsschrauben an der Rückwand 3 lösbar befestigt.

Die Aufnahme 16 weist in diesem Ausführungsbeispiel eine Basisfläche 17 sowie zwei als Feder ausgebildete Formschlusselemente 19 auf. Die Basisfläche 17 erstreckt sich orthogonal zu der Rückwand 3. Sie kann die Gewichtskraft eines medizinischen Geräts, das auf ihr "abgestellt" wird, tragen und überträgt diese an die Rückwand 3. Die als Feder oder Rippe ausgebildeten Formschlusselemente 19 wirken mit entsprechend geformten komplementären Formschlusselementen des nicht dargestellten medizinischen Geräts zusammen, so dass das medizinische Gerät nicht von der Basisfläche 16 herunterrutschen kann und seine Position relativ zu dem Gerätehalter 1 definiert ist.

Bezüglich der Gelenke 9 lässt sich noch anmerken, dass die Gelenke 9 baugleich sind. Sie können optional mit einem federbelasteten Zugschnapper oder Sperrbolzen 21 ausgestattet sein. In der Figur 1 weist das linke Gelenk 9 einen Sperrbolzen 21 auf. Darüber hinaus ist zu erkennen, dass das Gelenk 9 ein Gehäuse 23 aufweist und ein Mittelteil 25 umfasst. Der Mittelteil 25 ist mit den Streben 5 verschraubt, während das Gehäuse 23 mit dem Schwenkbügel 7 verbunden ist. Der in der Schließstellung über das Gehäuse 23 hinausragende Abschnitt des Mittelteils 25 dient in der geöffneten Stellung des Schwenkbügels 7 (nicht dargestellt in der Figur 1) als Anschlag für das Gehäuse 23 des Gelenks 9 und bestimmen auf diese Weise die Offenstellung des Schwenkbügels 7.

In der Figur 2 ist der Gerätehalter 1 in einer Seitenansicht dargestellt. Anders als in der Figur 1 ist ein medizinisches Gerät 27 in den Gerätehalter 1 eingesetzt ist. In der Figur 2 ist gut zu erkennen, dass das medizinische Gerät 27 mit seiner Unterseite auf der Basisfläche 17 der Aufnahme 16 steht. Die rippenförmigen Formschlusselemente 19 der Aufnahme 16 sind in der Seitenansicht nicht sichtbar. Sie befinden sich in komplementäre Vertiefungen an der Unterseite des Geräts 27. Dadurch wird ein Formschluss zwischen Gerät 27 und der Aufnahme 16 hergestellt.

In der Figur 2 ist gut zu erkennen, dass in der Schließstellung des Schwenkbügels 7 der gerätespezifische Niederhalter 13 an der Oberseite des medizinischen Geräts 27 anliegt. und auf diese Weise verhindert, dass das medizinische Gerät 27 von der Aufnahme 16 abhebt und der Formschluss zwischen den Formschlusselementen 19 und dem medizinischen Gerät 27 verloren geht.

Aus der der Figur 2 wird auch deutlich, dass ein Aufnahmeraum, der durch die Rückwand bzw. die Streben 5 und deren Schenkel 29 sowie den Schwenkbügel 7 mit den Formschlusselementen 11 einen Aufnahmeraum 31 begrenzen. Innerhalb dieses Aufnahmeraums 31 können die verschiedensten medizinischen Geräte 27 untergebracht und vor mechanischen Beschädigungen mit Hilfe des Gerätehalters 1 geschützt werden.

Die an dem Schwenkbügel 7 angeordneten Niederhalter 13 sind länger sind als für die Aufnahme des medizinischen Geräts 27 erforderlich.

In der Figur 3 ist das medizinische Gerät 27 um ein Zusatzmodul 33 ergänzt worden. Es kann zum Beispiel an der Vorderseite des medizinischen Geräts 27 angesetzt und mit dem Gerät 27 verbunden werden. Dieses Zusatzmodul 33 wird dann durch den Niederhalter 13 ebenfalls in Position gehalten.

Außerdem umgeben die Formschlusselemente 11 des Schwenkbügels 7 den oberen Teil des Zusatzmoduls 33 und schützen dieses vor Beschädigungen.

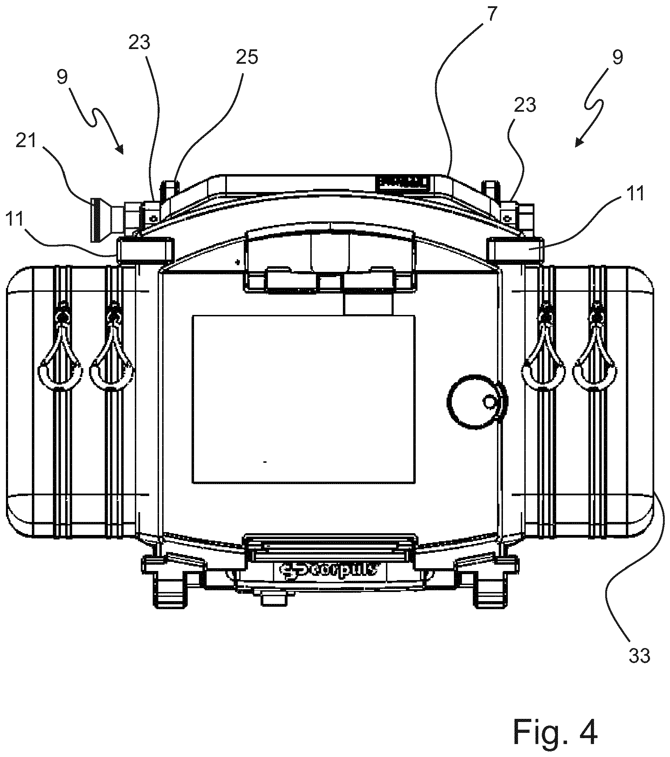

In der Figur 4 ist der Gerätehalter 1 mit dem angesetzten Gerät 27 sowie dem Zusatzmodul 33 von oben dargestellt, wobei der Schwenkbügel 7 die Offenstellung einnimmt.

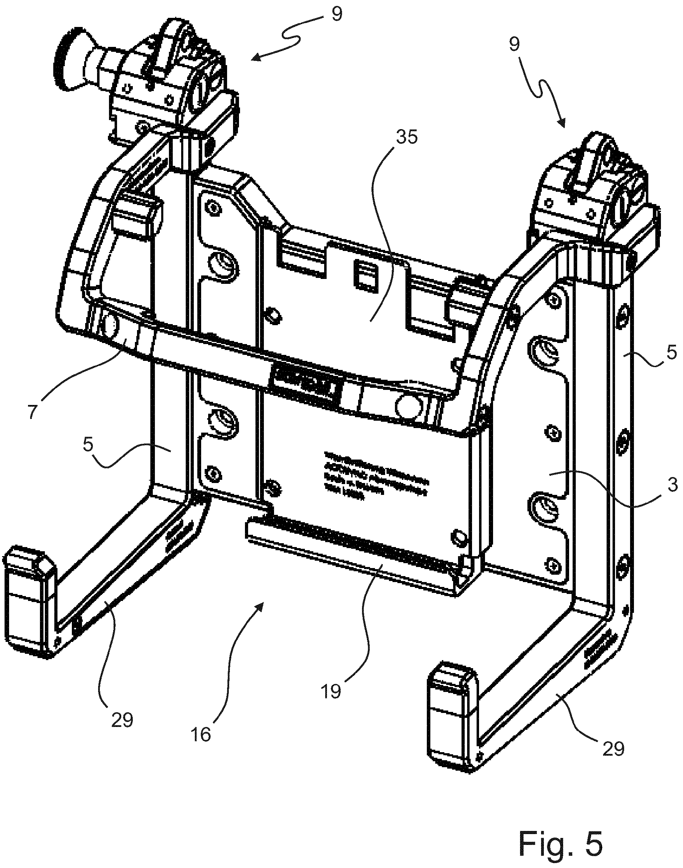

Anhand der Figuren 5 bis 8 wird ein weiteres Ausführungsbeispiel eines erfindungsgemäßen Gerätehalters 1 in verschiedenen Ansichten dargestellt.

In der Figur 5 ist eine Isometrie des Gerätehalters 1 dargestellt. Die Rückwand 3 ist baugleich mit der Rückwand 3 des ersten Ausführungsbeispiels. Die Schenkel 29 der Streben 5 sind etwas anders geformt als bei dem ersten Ausführungsbeispiel. Prinzipiell ist deren Funktion jedoch gleich.

Auch die gerätespezifische Aufnahme 16 ist bei diesem Ausführungsbeispiel anders geformt als im ersten Ausführungsbeispiel. Die Aufnahme 16 umfasst einen vertikalen Abschnitt 35, Der Abschnitt 35 ragt nach oben etwas über die Rückwand hinaus.

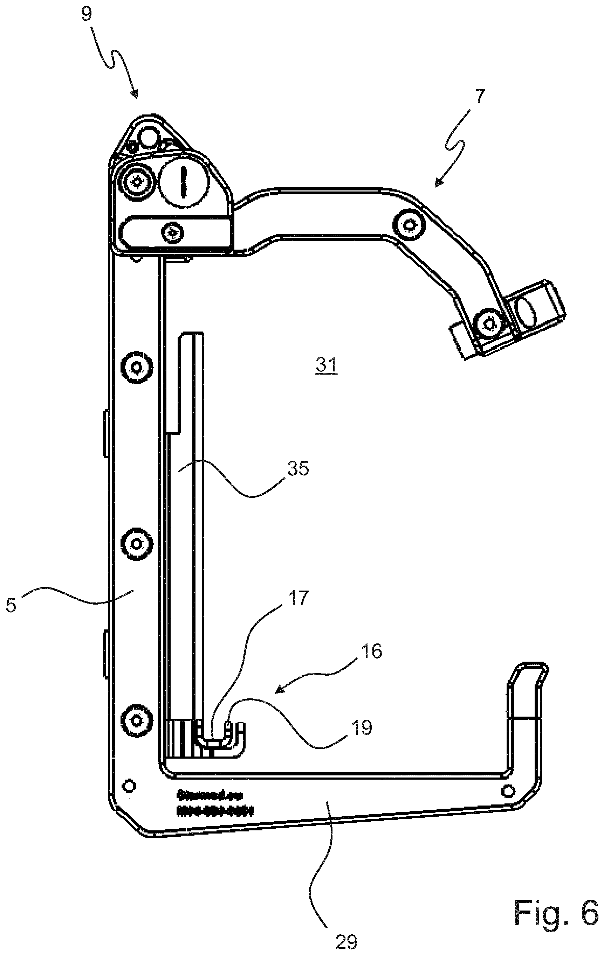

Die Basisfläche 17 wird in der Figur 5 größtenteils durch ein als Rippe ausgeführtes Formschlusselement 19 verdeckt. Details dieses Ausführungsbeispiels einer Aufnahme 16 sind in der Figur 6 besser zu erkennen.

In der Figur 5 ist zu erkennen, dass die Aufnahme 16, genauer gesagt der vertikale Abschnitt 35 mit Hilfe von Schrauben an der Rückwand 3 befestigt ist.

Der Schwenkbügel 7 ist bei diesem Ausführungsbeispiel ebenfalls etwas anders geformt. Der Schwenkbügel 7 des zweiten Ausführungsbeispiels hat keine Formschlusselemente 11 und die Niederhalter 13 sind bei diesem Ausführungsbeispiel anders ausgeführt. Weil die Niederhalter 13 mit dem Schwenkbügel 7 verschraubt sind, können sie jederzeit gegen andere spezifische Niederhalter 13 ausgetauscht werden.

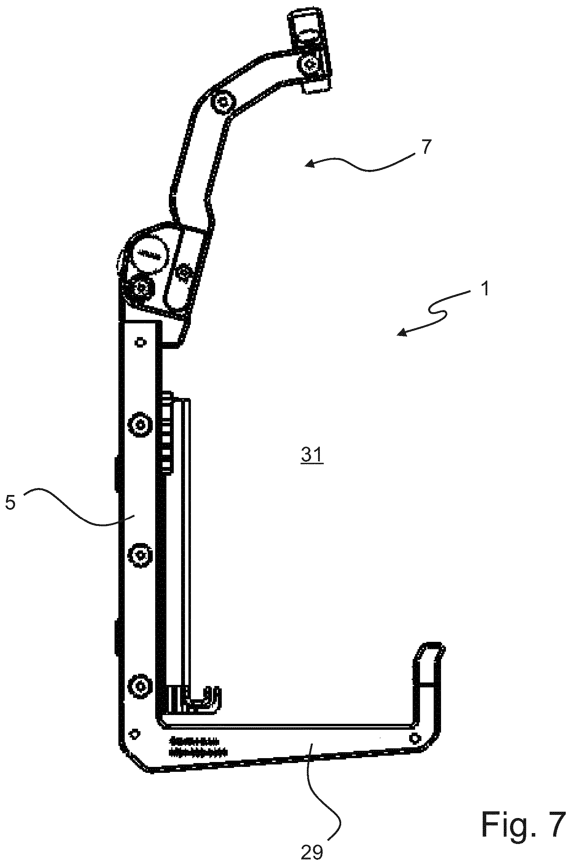

In der Figur 7 ist der Gerätehalter 1 ohne gerätespezifische Aufnahme 16 in der Offenstellung dargestellt. Diese Offenstellung wird durch den Mittelteil 25 des Gelenks 5 begrenzt, weil das Gehäuse 23 in Anlage zu dem Mittelteil 25 kommt, wenn der Schwenkbügel 7 geöffnet wird.

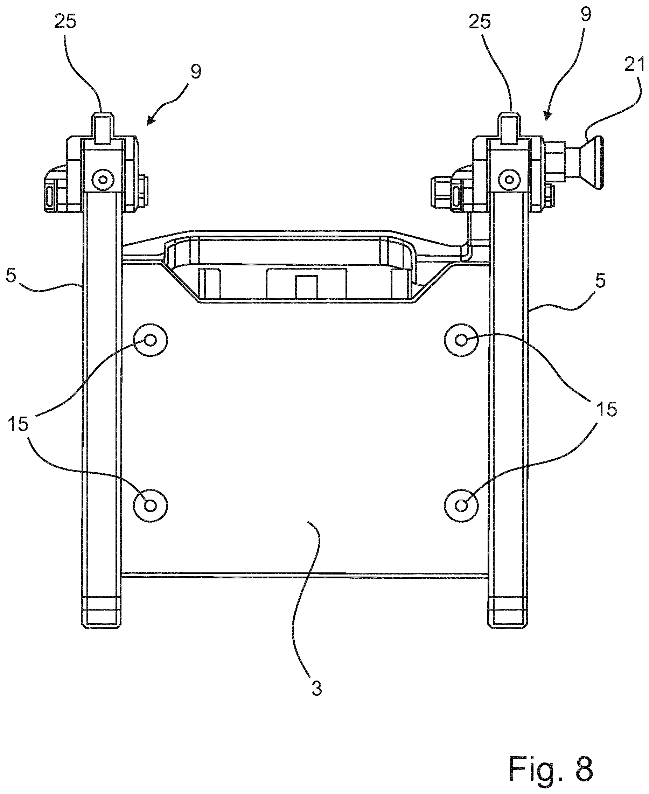

In der Figur 8 ist das zweite Ausführungsbeispiel von hinten dargestellt. In diesem Ausführungsbeispiel sind die Durchbrüche 15 in der Rückwand 3 besonders gut zu erkennen.

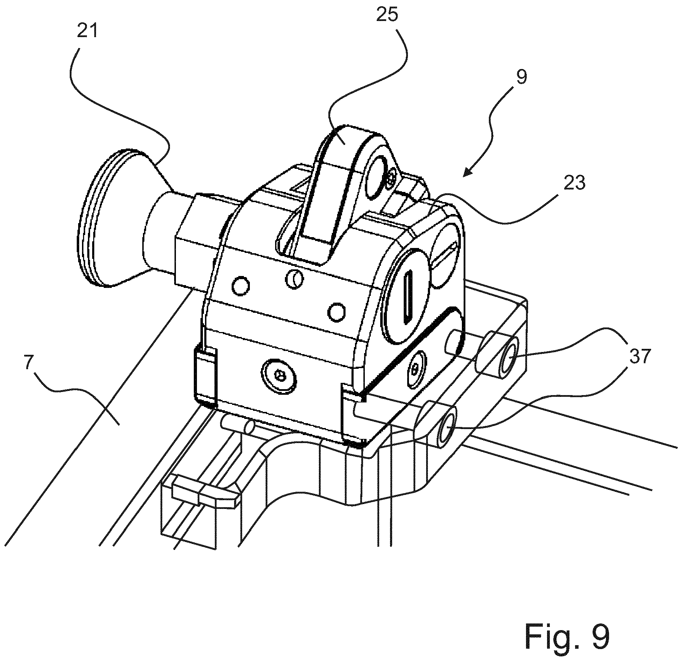

Anhand der Figuren 9ff werden die Gelenke 9 und deren Integration in den Gerätehalter 1 etwas näher dargestellt. In der Figur 9 ist das Gelenk 9 mit dem Sperrbolzen 21 etwas dargestellt. Das Gehäuse 23 des Gelenks 9 ist mit dem Schwenkbügel 7 verschraubt. Die zugehörigen Schrauben sind mit 37 bezeichnet.

Um das Gelenk bzw. das Gehäuse 23 des Gelenks 9 besonders sicher und fest mit dem Schwenkbügel 5 zu verbinden, ist ein Verstärkungselement 39 vorgesehen, das durch die Schrauben 37 gegen das Gehäuse 23 gezogen wird und mit dem Schwenkbügel 5 verschraubt ist.

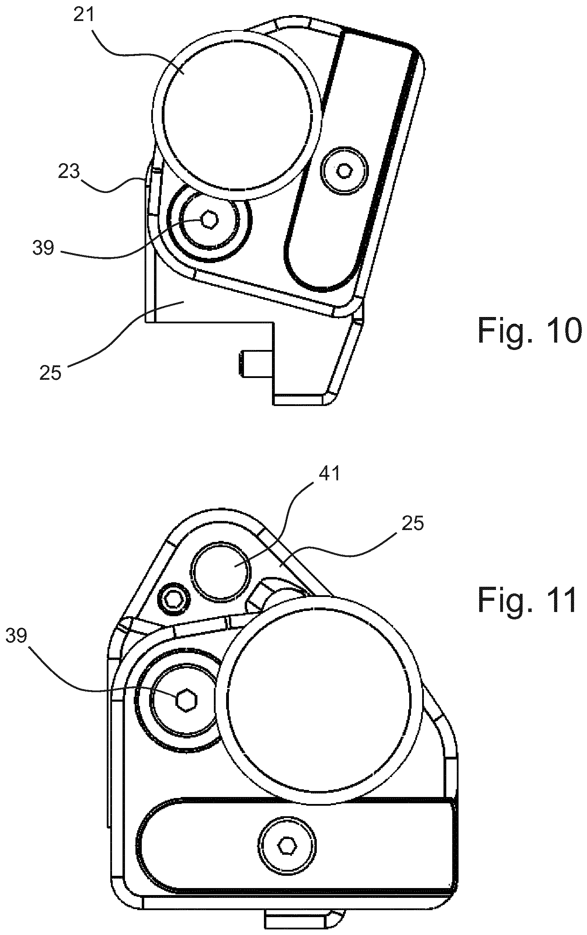

In der Figur 10 ist das Gelenk 9 in einer Seitenansicht in der Offenstellung dargestellt. In dieser Seitenansicht wird deutlich, dass der Mittelteil 25 in der Offenstellung erfindungsgemäß in dem Gehäuse 23 verschwindet.

In der Figur 11 ist das Gelenk in der Schließstellung dargestellt, wobei in dieser Schließstellung der Mittelteil 25 erfindungsgemäß das Gehäuse 23 überragt. Ein Lagerzapfen ist in den Figuren 10 und 11 mit 39 bezeichnet.

In der Figur 11 ist eine kreisrunde Vertiefung 41 in dem Mittelteil 25 zu erkennen. In der Offenstellung des Schwenkbügels 7 taucht der Sperrbolzen 21 federbelastet in diese in diese Vertiefung 41 ein. Dadurch wird der Schwenkbügel 7 in der Offenstellung gehalten. Um den Schwenkbügel 7 zu schließen, muss der Sperrbolzen 21 betätigt werden. Der Sperrbolzen 21 gleitet vielmehr gegen die Federkraft aus der Vertiefung 41 heraus.

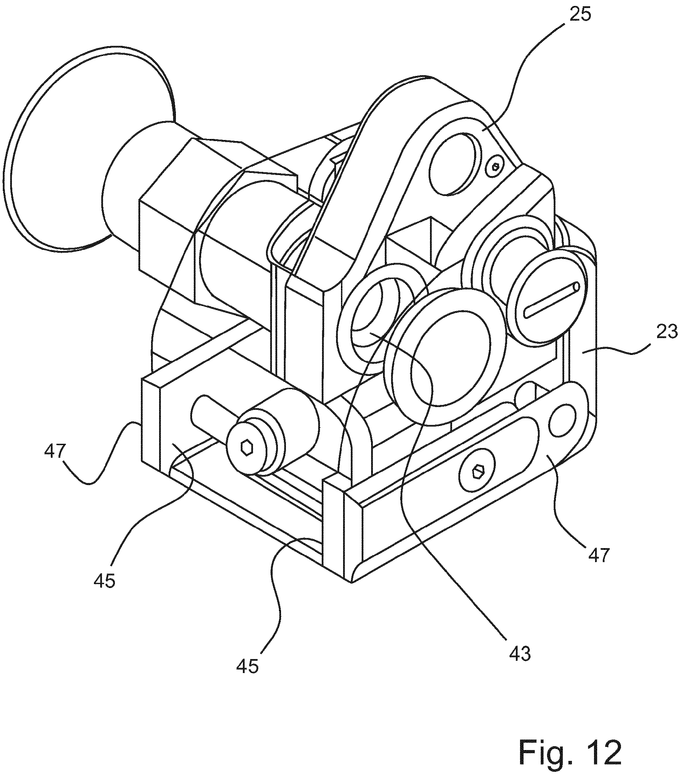

In der Figur 12 ist das Gelenk 9 in der Schließstellung teilweise transparent dargestellt. In dieser Darstellung ist ein Durchbruch 43 im Mittelteil 25 zu erkennen. Wenn der Sperrbolzen 21 in diesen Durchbruch 43 einfährt, ist das Gelenk 9 in der Schließstellung formschlüssig verriegelt. In der Figur 12 ist der federbelastete Sperrbolzen 21 nicht in den Durchbruch 43 eingefahren dargestellt, um den konstruktiven Aufbau des Gelenks 9 besser zu sichtbar zu machen.

Der Figur 12 kann man auch entnehmen, dass das Gehäuse 23 so aufgebaut ist, dass der Sperrbolzen 21 auf der linken oder auf der rechten Seite des Gehäuses 23 befestigt werden kann.

Entsprechendes gilt auch für Nuten 45 an beiden Seiten des Gehäuses 23. In einer der Nuten 45 wird der Schenkbügel 7 eingesetzt und mit einer Schraube an dem Gehäuse 23 befestigt. Die jeweils andere Nut 45 kann mit einer Abdeckung 47 verschlossen werden.

In der Figur 12 sind beide Nuten 45 mit einer Abdeckung 47 versehen worden. In der Figur 5 ist in einer Nut 45 der Schwenkbügel 7 befestigt; dien andere Nut 45 ist mit einer Abdeckung 47 versehen worden.

Anders ausgedrückt: Das Gelenk 9 kann als "rechtes" und als "linkes" Gelenk konfiguriert und eingebaut werden; das ist auch nachträglich möglich.

### Bezugszeichenliste

1 Gerätehalter
3 Rückwand
5 Streben (L-förmig)
7 Schwenkbügel
9 Gelenke
11 Formschlusselement am Schwenkbügel
13 Niederhalter
15 Durchbruch in der Rückwand
16 Aufnahme für ein medizinisches Gerät
17 Basisfläche
19 Formschlusselement
21 Sperrbolzen
23 Gehäuse
25 Mittelteil
27 medizinisches Gerät
29 Schenkel der Streben
31 Aufnahmeraum
33 Zusatzmodul f. medizinisches Gerät
35 Vertikaler Abschnitt
37 Schraube
39 Verstärkungselement
41 Vertiefung
43 Durchbruch im Mittelteil
45 Nut
47 Abdeckung

## Patentansprüche

1. Gerätehalter zur Aufnahme eines medizinischen Geräts (27), umfassend zwei L-förmige Streben (5) mit jeweils einem Schenkel (29), eine Rückwand (3) und einen Schwenkbügel (7), wobei die Streben (5) an der Rückwand (3) angeordnet sind, wobei der Schwenkbügel (7) gelenkig an den Streben (5) gelagert ist, und wobei der Schwenkbügel (5) in einer Schließstellung arretierbar ist, wobei der Schwenkbügel (7) mit Hilfe von zwei arretierbaren Gelenken (9) an den Streben (5) drehbar gelagert ist, wobei jedes Gelenk (9) ein Mittelteil (25) und ein Gehäuse (23) umfasst, wobei in dem Gehäuse (23) ein federbelasteter Sperrbolzen (21) angeordnet ist, der in der Schließstellung in einen Durchbruch des Mittelteils (23) eintaucht und dadurch das Gelenk (9) und mit ihm den Schwenkbügel (7) arretiert, **dadurch gekennzeichnet, dass** in einer Offenstellung des Gelenks (9) der Mittelteil (25) in dem Gehäuse (23) verschwindet, dass in einer Schließstellung des Gelenks (9) der Mittelteil (25) das Gehäuse (23) überragt, dass der Mittelteil (25) mit den Streben (5) verschraubt ist und das Gehäuse (23) mit dem Schwenkbügel (7) verbunden ist.

2. Gerätehalter nach Anspruch 1, **dadurch gekennzeichnet, dass** die Rückwand (3), die Schenkel (29) der Streben (5) und der Schwenkbügel (7) einen Aufnahmeraum (31) für das medizinische Gerät (27) begrenzen, wobei der Aufnahmeraum (31) mindestens eine Oberseite und eine Unterseite sowie eine Vorderseite und eine Rückseite des in ihm aufgenommenen medizinischen Geräts (27) überragt und dadurch vor Beschädigung schützt.

3. Gerätehalter nach Anspruch 1 oder 2, **dadurch gekennzeichnet, dass** an der Rückwand (3) eine gerätspezifische Aufnahme (16) für ein medizinisches Gerät (27) lösbar befestigt ist.

4. Gerätehalter nach Anspruch 2, **dadurch gekennzeichnet, dass** eine erste Aufnahme für ein medizinisches Gerät (27) eine Basisfläche (17) und mindestens ein Formschlusselement (19) umfasst.

5. Gerätehalter nach Anspruch 3, **dadurch gekennzeichnet, dass** die Basisfläche (17) orthogonal zu der Rückwand (3) angeordnet ist, und dass das mindestens eine Formschlusselement (19) über die Basisfläche (17) hinausragt oder/und dass das mindestens eine Formschlusselement (19) als Vertiefung in der Basisfläche (17) ausgebildet ist.

6. Gerätehalter nach einem der vorhergehenden Ansprüche, **dadurch gekennzeichnet, dass** der Schwenkbügel (7) ein Griffelement (8) umfasst.

7. Gerätehalter nach einem der vorhergehenden Ansprüche, **dadurch gekennzeichnet, dass** an dem Schwenkbügel (7) mindestens ein gerätespezifischer Niederhalter (13) für ein medizinisches Gerät (27) lösbar befestigt ist.

8. Gerätehalter nach einem der vorhergehenden Ansprüche, **dadurch gekennzeichnet, dass** die Streben (5) und die Rückwand (3) lösbar miteinander verbunden sind.

9. Gerätehalter nach einem der vorhergehenden Ansprüche, **dadurch gekennzeichnet, dass** die Rückwand (3) Durchbrüche (15) und/oder Gewindebohrungen aufweist.

## Claims

1. Device holder for receiving a medical device (27), comprising two L-shaped struts (5) each having a leg (29), and comprising a rear wall (3) and a pivoting bracket (7), the struts (5) being arranged on the rear wall (3), the pivoting bracket (7) being hingedly mounted on the struts (5), and it being possible for the pivoting bracket (5) to be locked in a closed position, the pivoting bracket (7) being rotatably mounted on the struts (5) by means of two lockable joints (9), each joint (9) comprising a central part (25) and a housing (23), a spring-loaded locking bolt (21) being arranged in the housing (23), which bolt, in the closed position, dips into an opening in the central part (23) and thereby locks the joint (9) and with it the pivoting bracket (7), **characterized in that**, in an open position of the joint (9), the central part (25) disappears into the housing (23), **in that**, in a closed position of the joint (9), the central part (25) projects beyond the housing (23), **in that** the central part (25) is screwed to the struts (5) and the housing (23) is connected to the pivoting bracket (7).

2. Device holder according to claim 1, **characterized in that** the rear wall (3), the legs (29) of the struts (5), and the pivoting bracket (7) delimit a receiving space (31) for the medical device (27), the receiving space (31) projecting beyond at least a top side and a bottom side as well as a front side and a rear side of the medical device (27) received therein and thereby protecting it from damage.

3. Device holder according to claim 1 or 2, **characterized in that** a device-specific holder (16) for a medical device (27) is detachably fastened to the rear wall (3).

4. Device holder according to claim 2, **characterized in that** a first receptacle for a medical device (27) comprises a base surface (17) and at least one interlocking element (19).

5. Device holder according to claim 3, **characterized in that** the base surface (17) is arranged orthogonally to the rear wall (3), and **in that** the at least one interlocking element (19) projects beyond the base surface (17) or/and **in that** the at least one interlocking element (19) is in the form of a recess in the base surface (17).

6. Device holder according to any of the preceding claims, **characterized in that** the pivoting bracket (7) comprises a handle element (8).

7. Device holder according to any of the preceding claims, **characterized in that** at least one device-specific hold-down device (13) for a medical device (27) is detachably fastened to the pivoting bracket (7).

8. Device holder according to any of the preceding claims, **characterized in that** the struts (5) and the rear wall (3) are detachably interconnected.

9. Device holder according to any of the preceding claims, **characterized in that** the rear wall (3) has openings (15) and/or threaded holes.

## Revendications

1. Support pour appareil destiné à recevoir un appareil médical (27), comprenant deux entretoises (5) en forme de L comportant respectivement une branche (29), une paroi arrière (3) et un arceau pivotant (7), dans lequel les entretoises (5) sont disposées sur la paroi arrière (3), dans lequel l'arceau pivotant (7) est monté de manière articulée sur les entretoises (5), et dans lequel l'arceau pivotant (5) peut être bloqué dans une position de fermeture, dans lequel l'arceau pivotant (7) est monté de manière à pouvoir pivoter sur les entretoises (5) à l'aide de deux articulations (9) pouvant être bloquées, dans lequel chaque articulation (9) comprend une partie centrale (25) et un boîtier (23), dans lequel un boulon de verrouillage (21) sollicité élastiquement est disposé dans le boîtier (23), lequel boulon, dans la position de fermeture, s'enfonce dans une ouverture de la partie centrale (23) et bloque ainsi l'articulation (9) et, avec elle, l'arceau pivotant (7), **caractérisé en ce que**, dans une position d'ouverture de l'articulation (9), la partie centrale (25) disparaît dans le boîtier (23), **en ce que**, dans une position de fermeture de l'articulation (9), la partie centrale (25) dépasse du boîtier (23), **en ce que** la partie centrale (25) est vissée avec les entretoises (5) et le boîtier (23) est relié à l'arceau pivotant (7).

2. Support pour appareil selon la revendication 1, **caractérisé en ce que** la paroi arrière (3), les branches (29) des entretoises (5) et l'arceau pivotant (7) délimitent un espace de réception (31) pour l'appareil médical (27), dans lequel l'espace de réception (31) dépasse au moins d'une face supérieure et d'une face inférieure ainsi que d'une face avant et d'une face arrière de l'appareil médical (27) qui y est reçu et le protège ainsi contre les dommages.

3. Support pour appareil selon la revendication 1 ou 2, **caractérisé en ce qu'**un réceptacle (16) spécifique à l'appareil et destiné à un appareil médical (27) est fixé de manière amovible sur la paroi arrière (3).

4. Support pour appareil selon la revendication 2, **caractérisé en ce qu'**un premier réceptacle pour un appareil médical (27) comprend une surface formant base (17) et au moins un élément de complémentarité de forme (19).

5. Support pour appareil selon la revendication 3, **caractérisé en ce que** la surface formant base (17) est disposée orthogonalement à la paroi arrière (3), et **en ce que** l'au moins un élément de complémentarité de forme (19) fait saillie depuis la surface formant base (17) et/ou **en ce que** l'au moins un élément de complémentarité de forme (19) est réalisé sous la forme d'un renfoncement dans la surface formant base (17).

6. Support pour appareil selon l'une des revendications précédentes, **caractérisé en ce que** l'arceau pivotant (7) comprend un élément de préhension (8).

7. Support pour appareil selon l'une des revendications précédentes, **caractérisé en ce qu'**au moins un serre-flan (13) spécifique à l'appareil et destiné à un appareil médical (27) est fixé de manière amovible à l'arceau pivotant (7).

8. Support pour appareil selon l'une des revendications précédentes, **caractérisé en ce que** les entretoises (5) et la paroi arrière (3) sont reliées entre elles de manière amovible.

9. Support pour appareil selon l'une des revendications précédentes, **caractérisé en ce que** la paroi arrière (3) présente des ouvertures (15) et/ou des trous taraudés.
